# EUROPÄISCHE PATENTANMELDUNG

(11) **EP 0 943 523 A1**
(43) Veröffentlichungstag der Anmeldung: **22.09.1999**
(21) Anmeldenummer: 98810223.2
(22) Anmeldetag: 17.03.1998
(51) Int. Cl.: B62B 17/02

(54) **Schneegleitelement und damit ausgerüsteter Schlitten**

(71) Anmelder: Wenger, Bernhard, 3753 Oey-Diemtigen (CH)
(72) Erfinder: Wenger, Bernhard, 3753 Oey-Diemtigen (CH)
(74) Vertreter: AMMANN PATENTANWAELTE AG BERN

(57) **Zusammenfassung**

Schneegleitelement (11) für einen Schlitten, welches Schneegleitelement (11) auf einer Kufe (12) eines Schlittens lösbar montierbar ist, welche mit einem metallischen Gleitelement (18) versehen ist, das mit der Kufe (12) fest verbunden ist.

Damit das Schneegleitelement (11) preiswert und leicht zu montieren und auszuwechseln ist, ist es dadurch gekennzeichnet, dass es
(a) aus einem Kunststoff besteht,
(b) eine längliche Form hat, die sich im wesentlichen über die Länge der Kufe (12) erstreckt, und deren Krümmung der Krümmung der Kufe (12) angepasst oder daran anpassbar ist, und
(c) einen im wesentlichen U-förmigen Querschnitt hat, wobei die Seitenwände der U-Form parallel zu den seitlichen Rändern der Kufe verlaufen und die Aussenfläche der Basis der U-Form als Gleitfläche (13) dient, und
(d) Mittel (14,15) enthält, mit denen eine lösbare Verbindung zwischen dem Schneegleitelement (11) und der Kufe (12) herstellbar ist.

## Beschreibung

Die Erfindung betrifft ein Schneegleitelement für einen Schlitten, welches Schneegleitelement auf einer Kufe eines Schlittens lösbar montierbar ist, welche mit einem metallischen Gleitelement versehen ist, das mit der Kufe fest verbunden ist.

Die Erfindung betrifft ferner ein Schneegleitelement für einen Schlitten, welches Schneegleitelement auf einer Kufe eines Schlittens fest montierbar ist, welche sonst kein darin eingelegtes oder darauf montiertes Gleitelement hat.

Die Erfindung betrifft ausserdem einen Schlitten, der mit einem erfindungsgemässen Schneegleitelement ausrüstbar ist.

Schlittenkufen werden normalerweise mit Gleitelementen versehen, die mit den Kufen fest verbunden sind, und die aus einem Metall, z. B. Stahl, oder aus einem Kunststoff bestehen.

Metallische Gleitelemente gleiten zwar gut auf harten, vereisten Schneebahnen, sind aber für Fahrten auf Neuschnee bzw. Tiefschnee nicht geeignet. Gleitelemente aus Kunststoff haben hingegen bei den letztgenannten Schneeverhältnissen ein besseres Fahrverhalten, nicht aber auf harten, vereisten Schneebahnen.

Es gibt daher ein Bedürfnis, über leicht (von Hand und ohne Werkzeug) montierbare, auswechselbare, preiswerte Schneegleitelemente zu verfügen, die auf die Kufen eines Schlittens lösbar montiert werden können, und mit denen bei bestimmten Schneeverhältnissen, insbesondere bei Neuschnee bzw. Tiefschnee, bessere Fahreigenschaften als mit den bestehenden metallischen Gleitelementen eines Schlittens erzielt werden können.

Schneegleitelemente, die auf der Kufe eines Schlittens als zusätzliches Gleitelement montierbar sind, sind in der DE-A-3116571, CH-A-483333 und CH-A-340139 beschrieben. Gemeinsame Nachteile dieser bekannten Schneegleitelemente sind, dass ihre Montierung nicht einfach durchzuführen ist und dass ihre Gleitfläche viel breiter als die metallische Gleitfläche der Schlittenkufen ist, was sich auf das damit erreichbare Fahrverhalten negativ auswirkt.

Der Erfindung liegt daher die Aufgabe zugrunde, ein verbessertes Schneegleitelement zur Verfügung zu stellen, mit dem die oben erwähnten Nachteile beseitigt werden können, wobei insbesondere ein leicht montierbares und auswechselbares Schneegleitelement und/oder ein Schneegleitelement zur Verfügung gestellt werden soll, das bei unterschiedlichen Schneeverhältnissen ein besseres Fahrverhalten hat.

Gemäss einem ersten Aspekt der Erfindung wird die obige Aufgabe mit einem Schneegleitelement gelöst, welches dadurch gekennzeichnet ist, dass es
(a) aus einem Kunststoff besteht,
(b) eine längliche Form hat, die sich im wesentlichen über die Länge der Kufe erstreckt und deren Krümmung der Krümmung der Kufe angepasst oder daran anpassbar ist, und
(c) einen im wesentlichen U-förmigen Querschnitt hat, wobei die Seitenwände der U-Form parallel zu den seitlichen Rändern der Kufe verlaufen und die Aussenfläche der Basis der U-Form als Gleitfläche dient, und
(d) Mittel enthält, mit denen eine lösbare Verbindung zwischen dem Schneegleitelement und der Kufe herstellbar ist.

Die mit dieser erfindungsgemässen Lösung erzielten Vorteile liegen insbesondere darin, dass
- die erfindungsgemässen Schneegleitelemente leicht montierbar und auswechselbar sind (ohne Werkzeug, mit sehr einfachen Befestigungsmitteln möglich),
- die Nutzbarkeit eines konventionellen Schlittens sehr preiswert erheblich erweitert wird (bisher musste man einen ersten Schlitten mit Metallgleitelementen und einen zweiten Schlitten mit Kunststoffgleitelementen haben, um ein gutes Fahrverhalten bei unterschiedlichen Bahnverhältnissen zu erreichen), weil die Herstellungskosten der erfindungsgemässen Schneegleitelemente relativ niedrig sind,
- das Fahrverhalten der erfindungsgemässen Schneegleitelemente durch Wachsen verbessert werden kann,
- man für den gleichen Schlitten Schneegleitelemente aus verschiedenen Kunststofftypen haben kann,
- leichte Schäden durch Ausgiessen, Schleifen, Hobeln oder Ausflicken, reparierbar sind.

Eine bevorzugte Ausführungsform des erfindungsgemässen Schneegleitelementes ist dadurch gekennzeichnet, dass dessen Gleitfläche wenigstens eine im Schneegleitelement eingesetzte Metallkante enthält, welche eine Kunststoffkante der Zusatzkufe ersetzt. Diese Ausführungsform hat den Vorteil, dass damit ein besseres Fahrverhalten in Kurven (Kurven sind oft vereist) erzielt wird, dass sie auf vereisten Bahnenabschnitten besser gleitet und dass sie sich langsamer abnutzt, als Schneegleitelemente, die nur aus Kunststoff bestehen.

Gemäss einem zweiten Aspekt der Erfindung wird die obige Aufgabe mit einem Schneegleitelement gelöst, welches dadurch gekennzeichnet ist, dass es sich aus folgenden Teilen zusammensetzt:
(a) einem ersten Teil, der einen U-förmigen Querschnitt hat, aus einem Metall besteht und mit einem hölzernen Teil des Schlittens fest verbunden ist, und
(b) einem zweiten Teil, der aus einem Kunststoff besteht, im Innenraum des ersten Teils eingesetzt und mit ihm fest verbunden ist,
   wobei beide Teile ein zusammengesetztes Schneegleitelement bilden, dessen Gleitfläche im mittleren Bereich eine Aussenfläche des zweiten Teils und als Aussenkanten je eine Aussenfläche des ersten Teils umfasst.

Die mit diesem erfindungsgemässen Schneegleitelement erzielten Vorteile liegen insbesondere darin, dass es insbesondere für Schlittenrennen geeignet ist, bei denen mit unterschiedlichen Bahnverhältnissen entlang der Rennstrecke und insbesondere bei den Kurven zu rechnen ist.

Im folgenden werden anhand der beiliegenden Zeichnungen Ausführungsbeispiele des erfindungsgemässen Schneegleitelementes beschrieben. Es stellen dar:
- Figur 1: eine schematische, perspektivische Ansicht eines Schlittens, dessen eine Kufe 12 mit einem erfindungsgemässen Schneegleitelement 11 ausgerüstet ist.
- Figur 2: eine schematische Seitenansicht eines Teils der Kufe 12 in Figur 1 und des darauf montierten Schneegleitelementes 11.
- Figur 3: eine perspektivische Ansicht des hinteren Teils einer ersten Ausführungsform des Schneegleitelementes 11 in Figuren 1 und 2.
- Figur 4: einen Querschnitt des Schneegleitelementes 11 in Figur 3 und des dazugehörigen Bügels 15.
- Figur 5: einen Querschnitt einer zweiten Ausführungsform des Schneegleitelementes 11 in Figuren 1 und 2.
- Figur 6: einen Querschnitt einer dritten Ausführungsform eines erfindungsgemässen Schneegleitelementes.
- Figur 7: einen Querschnitt einer Variante des Schneegleitelementes gemäss Figur 6.

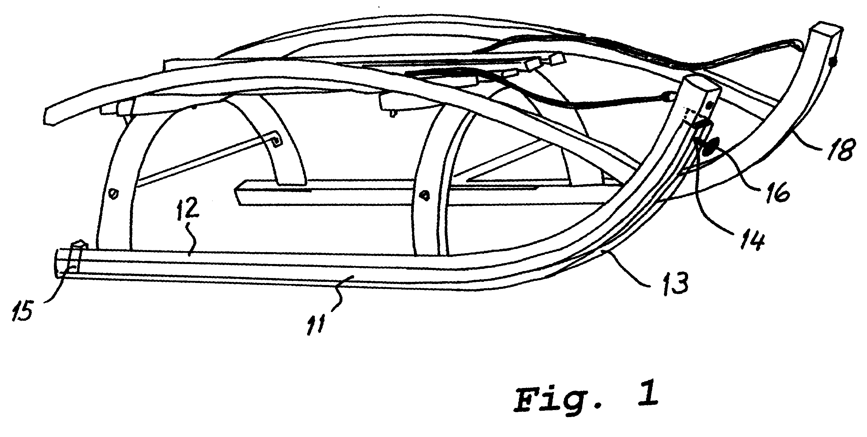

Wie aus Figur 1 ersichtlich, lässt sich ein erfindungsgemässes Schneegleitelement 11 auf einer Kufe 12 eines Schlittens lösbar montieren, welche mit einem metallischen Gleitelement 18 versehen ist, das mit der Kufe fest verbunden ist.

Das Schneegleitelement 11 besteht aus einem geeigneten Kunststoff, z. B. Polyäthylen, und hat eine längliche Form, die sich im wesentlichen über die Länge der Kufe 12 erstreckt.

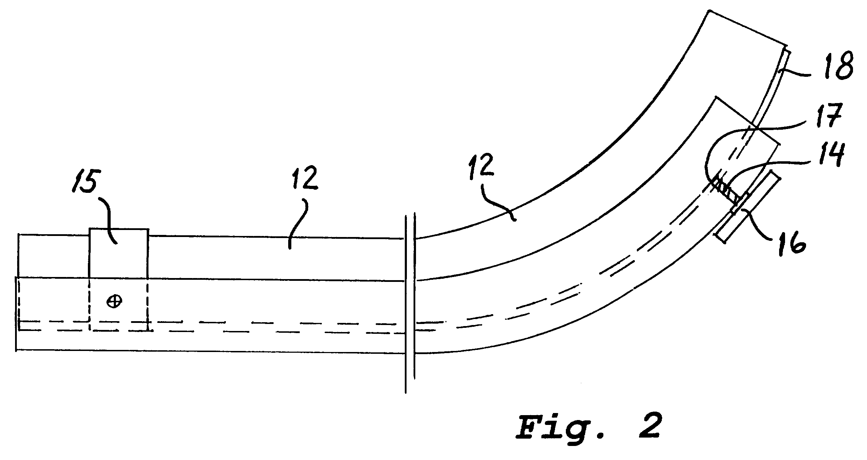

Wie in Figur 2 dargestellt, ist die Krümmung des Schneegleitelementes 11 an die Krümmung der Kufe 12 angepasst. Wenn nötig lässt sich ausserdem die Krümmung des Schneegleitelementes 11 durch Wärmebehandlung an die Krümmung der Kufe 12 anpassen.

Wie aus Figuren 1, 3 und 4 ersichtlich hat das Schneegleitelement 11 einen im wesentlichen U-förmigen Querschnitt, wobei die Seitenwände der U-Form parallel zu den seitlichen Rändern der Kufe verlaufen und die Aussenfläche der Basis der U-Form als Gleitfläche 13 dient.

Das Schneegleitelement 11 hat in ihrem vorderen Endteil eine Bohrung 14 und in ihrem hinteren Endteil einen Bügel 15, z. B. einen metallischen Bügel, der mit dem Körper des Schneegleitelementes 11 fest verbunden ist, z. B. durch eine Schraubverbindung. Mit diesen Mitteln lässt sich eine einfache, lösbare Verbindung zwischen dem Schneegleitelement 11 und der Kufe 12 herstellen. Wie aus Figur 2 ersichtlich, wird dafür das Schneegleitelement 11 auf der Kufe 12 so angeordnet, das der hintere Teil der Kufe 12 durch den Bügel 15 eingeschoben ist, um eine gleitende Verbindung der beiden Teile zu bilden, und der vordere Teil des Schneegleitelementes 11 mittels einer Schraube 16, z. B. einer Flügelschraube, die von Hand montiert werden kann, an der Kufe 12 befestigt wird, wobei die Schraube 16 durch die Bohrung 14 in ein entsprechendes Gewinde eingeführt wird, das in einem bestimmten Punkt 17 der Kufe 12 vorhanden ist.

Die gleitende Verbindung des hinteren Teils des Schneegleitelementes 11 mit der Kufe 12 hat den Vorteil, dass thermische Dehnung keine mechanischen Spannungen im Schneegleitelement 11 erzeugen kann.

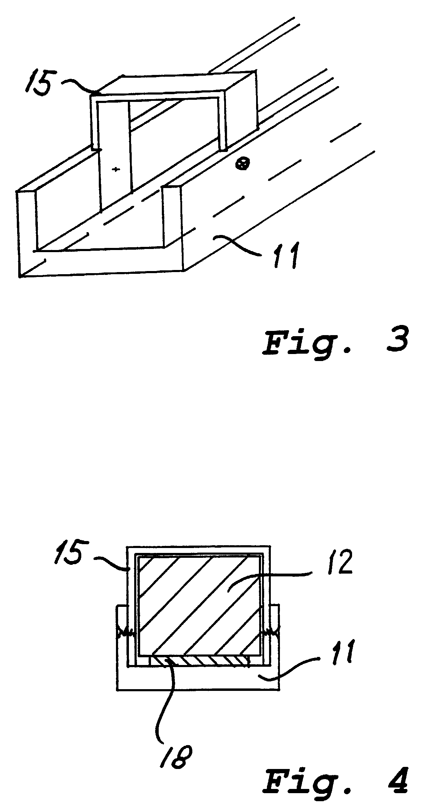

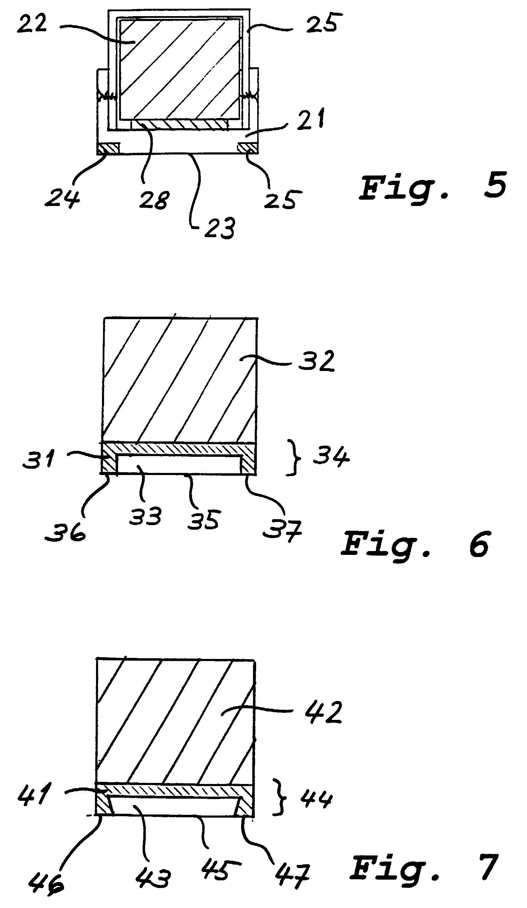

Figur 5 zeigt einen Querschnitt einer zweiten Ausführungsform eines erfindungsgemässen Schneegleitelementes 21. Dieses unterscheidet sich von der in Figuren 3 und 4 gezeigten ersten Ausführungsform dadurch, dass seine Gleitfläche 23 wenigstens eine im Schneegleitelement 21 eingesetzte Metallkante 24 oder 25 enthält, welche eine Kunststoffkante ersetzt. Vorzugsweise enthält die Gleitfläche 23 zwei im Schneegleitelement 21 eingesetzte Metallkanten 24 und 25. Wie in Figur dargestellt, hat auch das Schneegleitelement 21 einen Bügel 25 und lässt sich auf einer Kufe 22 montieren, die ein damit verbundenes metallisches Gleitelement 28 hat.

Figur 6 zeigt einen Querschnitt einer dritten Ausführungsform eines erfindungsgemässen Schneegleitelementes 34, das im Unterschied zu den oben beschriebenen Ausführungsformen dazu geeignet ist, auf einer hölzernen Kufe 32 eines Schlittens fest montiert zu werden, die sonst kein Gleitelement hat. Das Schneegleitelement 34 setzt sich aus folgenden Teilen zusammen: aus einem ersten Teil 31, der einen U-förmigen Querschnitt hat, aus einem Metall besteht, und mit der Kufe 32 fest verbunden ist, und aus einem zweiten Teil 33, der aus einem Kunststoff besteht, im Innenraum des ersten Teils 31 eingesetzt und mit ihm fest verbunden ist.

Beide Teile 31 und 33 bilden ein zusammengesetztes Schneegleitelement 34, dessen Gleitfläche im mittleren Bereich eine Aussenfläche 35 des Kunststoffteils 33 und als Aussenkanten je eine Aussenfläche 36 bzw. 37 des metallischen Teils 31 umfasst.

Figur 7 zeigt einen Querschnitt eines erfindungsgemässen Schneegleitelementes 44, das eine Variante des Schneegleitelementes 34 ist, sich aus einem metallischen Teil 41 und einen Kunststoffteil 43 zusammensetzt, auf einer hölzernen Kufe 42 montiert ist, und sich vom Schneegleitelement 34 gemäss Figur 6 lediglich durch die in Figur 7 gezeigte Form des Querschnitts des Kunststoffteils 43 und des metallischen Teils 41 unterscheidet.

Bei allen oben beschriebenen Ausführungsformen werden die Abmessungen des erfindungsgemässen Schneegleitelementes so gewählt, dass das Verhältnis der Breite der Gleitfläche des Schneegleitelements zur Breite der Kufe 12 kleiner als 1.5 ist.

Der in Figur 1 dargestellte Schlitten kann im Rahmen der Erfindung sowohl mit den auswechselbaren Schneegleitelementen gemäss Figuren 1 bis 5, als auch mit den fest montierbaren Schneegleitelementen gemäss Figuren 6 und 7 ausgerüstet werden, wobei im letzen Fall vorausgesetzt wird, dass die Kufen 12 sonst kein darin eingelegtes oder darauf montiertes Gleitelement haben.

Da die Streben, an denen die Hufen eines Schlittens befestigt sind, bei sportlichen Modellen in der Regel nicht ganz vertikal sind, sondern einen kleinen Neigungswinkel haben, liegen die Gleitflächen der Kufen auch nicht in einer ganz waagrechten Ebene, sondern bilden auch einen kleinen Neigungswinkel mit der Fläche der Bahn, auf welcher der Schlitten gleitet. Diese geometrische Eigenschaft der Gleitflächen der Kufen in Kombination mit dem Aufbau der oben beschriebenen erfindungsgemässen Schneegleitelemente hat den Vorteil, dass die effektive Gleitfläche dieser Schneegleitelemente sehr klein ist, weil sie durch eine Kante des Schneegleitelementes und nicht durch die ganze untere Aussenfläche desselben gebildet wird. Dies ermöglicht eine höhere Fahrgeschwindigkeit und ein besseres Fahrverhalten beim Kurvenfahren.

## Patentansprüche

1. Schneegleitelement für einen Schlitten, welches Schneegleitelement auf einer Kufe eines Schlittens lösbar montierbar ist, welche mit einem metallischen Gleitelement versehen ist, das mit der Kufe fest verbunden ist, welches Schneegleitelement
dadurch gekennzeichnet ist, dass es
(a) aus einem Kunststoff besteht,
(b) eine längliche Form hat, die sich im wesentlichen über die Länge der Kufe (12) erstreckt, und deren Krümmung der Krümmung der Kufe angepasst oder daran anpassbar ist, und
(c) einen im wesentlichen U-förmigen Querschnitt hat, wobei die Seitenwände der U-Form parallel zu den seitlichen Rändern der Kufe verlaufen und die Aussenfläche der Basis der U-Form als Gleitfläche (13) dient, und
(d) Mittel (14, 15) enthält, mit denen eine lösbare Verbindung zwischen dem Schneegleitelement (11) und der Kufe (12) herstellbar ist.

2. Schneegleitelement gemäss Anspruch 1, dadurch gekennzeichnet, dass es
(a) an seinem vorderen Ende in Fahrtrichtung so ausgebildet ist, dass es durch eine einfache, lösbare Befestigung an einem vorbestimmten Punkt (17) der Kufe (12) befestigbar ist, und
(b) an seinem entgegengesetzten Ende Mittel aufweist, mit denen eine gleitende Verbindung des Schneegleitelements (11) mit der Kufe (12) herstellbar ist.

3. Schneegleitelement gemäss Anspruch 2, dadurch gekennzeichnet, dass es an dem Ende, an dem es an einem bestimmten Punkt (17) der Kufe (12) befestigbar ist, eine Bohrung (14) aufweist, durch die eine einfache Schraubverbindung zwischen dem Schneegleitelement und der Kufe (12) ohne Werkzeug herstellbar ist

4. Schneegleitelement gemäss Anspruch 2, dadurch gekennzeichnet, dass die Mittel für die gleitende Verbindung des Schneegleitelementes (11) mit der Kufe (12) einen Bügel (15) enthalten, der mit dem Schneegleitelement (11) fest verbunden ist, und der mit diesem einen Durchgang bildet, in dem die Kufe (12) angeordnet werden kann.

5. Schneegleitelement gemäss Anspruch 1, dadurch gekennzeichnet, dass seine Gleitfläche (23) wenigstens eine im Schneegleitelement (21) eingesetzte Metallkante (24, 25) enthält, welche eine Kunststoffkante ersetzt.

6. Schneegleitelement für einen Schlitten, welches Schneegleitelement auf einer Kufe eines Schlittens fest montierbar ist, die sonst kein darin eingelegtes oder darauf montiertes Gleitelement hat, welches Schneegleitelement dadurch gekennzeichnet ist, dass es sich aus folgenden Teilen zusammensetzt:
(a) einem ersten Teil (31), der einen U-förmigen Querschnitt hat, aus einem Metall besteht, und mit der Kufe (32) fest verbunden ist, und
(b) einem zweiten Teil (33), der aus einem Kunststoff besteht, im Innenraum des ersten Teils (31) eingesetzt und mit ihm fest verbunden ist,
wobei beide Teile ein zusammengesetztes Schneegleitelement (34) bilden, dessen Gleitfläche im mittleren Bereich eine Aussenfläche (35) des zweiten Teils (33) und als Aussenkanten je eine Aussenfläche (36, 37) des ersten Teils (31) umfasst.

7. Schneegleitelement nach einem der Ansprüche 1 bis 6, dadurch gekennzeichnet, dass das Verhältnis der Breite der Gleitfläche des Schneegleitelements (13, 23) zur Breite der Kufe (12) kleiner als 1.5 ist.

8. Schlitten, dadurch gekennzeichnet, dass er mit Schneegleitelementen gemäss einem der Ansprüche 1 bis 7 ausrüstbar ist.
